# EUROPEAN PATENT SPECIFICATION

(11) **EP 2 357 873 B1**
(45) Date of publication and mention of the grant of the patent: **22.08.2012**
(21) Application number: 11001153.3
(22) Date of filing: 11.02.2011
(51) Int. Cl.: H04W 76/02

(54) **Method of handling radio resource reconfiguration**
Verfahren zur Abwicklung einer Funkressourcenneukonfiguration
Procédé de gestion de la reconfiguration de ressources radio

(30) Priority: 11.02.2010 US 303322 P; 10.02.2011 US 24340
(43) Date of publication of application: 17.08.2011
(73) Proprietor: HTC Corporation, Taoyuan County 330 (TW)
(72) Inventor: Chen, Te-Ming, Taoyuan City Taoyuan County 330 (TW)
(74) Representative: Klang, Alexander H.

(56) References cited:
- WO-A2-2009/018164
- MOTOROLA: "CR to TS 25.331 on Corrections to Security procedure on Missing integrity protection reset on relocation and counter check response actions for asymmetric bearer configurations", 3GPP DRAFT; R2-021440, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Gyeongju, Korea; 20020528, 28 May 2002 (2002-05-28), XP050120987, [retrieved on 2002-05-28]

## Description

### Background of the Invention

### 1. Field of the Invention

The application relates to a method used in a wireless communication system and related communication device, and more particularly, to a method for handling radio resource reconfiguration in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as to user equipments (UEs).

In the LTE system defined by 3GPP, the logical connection between the UE and the E-UTRAN is defined by radio resource control (RRC) connection states. The RRC states of the UE contain an RRC_IDLE state and an RRC_CONNECTED state. Mobility control in RRC_IDLE is UE-controlled (e.g. cell reselection) while in RRC_CONNECTED it is controlled by the E-UTRAN.

In RRC_CONNECTED, the E-UTRAN allocates radio resource to the UE to facilitate the transfer of (unicast) data via shared data channels. To support this operation, the UE monitors an associated control channel which is used to indicate the dynamic allocation of the shared transmission resources in time and frequency.

A RRC connection reconfiguration procedure is used to establish, modify or release radio bearers (e.g. DRBs (Data Radio Bearer)). In LTE, RRC connection reconfiguration also involves setting up a default EPS (Evolved Packet System) bearer between the UE and a core network (CN). This EPS bearer is set up on the basis of a non-guaranteed bit rate allowing the application-level signaling to take place as soon as a secure RRC connection is established.

In addition, the same RRC connection reconfiguration procedure is employed to perform handovers, NAS (Non-Access Stratum) message transfer and configuration of measurements. However, certain types of reconfiguration cannot be performed until the AS (Access Stratum) security has been activated. As a part of the RRC connection reconfiguration procedure, the E-UTRAN sends an RRC connection reconfiguration message with the appropriate information elements. Upon a successful handover, the UE responds with a message "RRC connection reconfiguration complete".

Inter-RAT (radio access technology) mobility to the E-UTRAN is achieved by sending the RRC connection reconfiguration message on the source RAT. A successful handover to the E-UTRAN results in establishment of SRBs (Signalling Radio Bearers), user radio bearers and activation of security in the E-UTRAN marked by the transmission of the "RRC connection reconfiguration complete" message by the UE. Mobility from the E-UTRAN to another RAT, whether by handover or cell change order, is achieved by transmitting a "mobility from E-UTRAN" command to the UE.

After a successful handover, the UE will indicate release of the DRB(s) and the eps-Bearerldentity of the released DRB(s) to upper layers only after a successful handover. This avoids some misunderstandings between UE and upper layers, e.g. the EPS bearer and DRB bearer synchronization. Nevertheless, the UE indicates the establishment of the DRB(s) and the eps-Bearerldentity of the established DRB(s) to upper layers (e.g. NAS layer) whether the handover is successful or not. This will result in the radio resources mismatch between UE and upper layers.

With regard to the prior art, attention is drawn to MOTOROLA: "CR to TS 25.331 on Corrections to Security procedure on Missing integrity protection reset on relocation and counter check response actions for asymmetric bearer configurations", 3GPP DRAFT; R2-021440, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, RAN WG2, Gyeongju, Korea; 28 May 2002, XP050120987.

This document describes an inter-RAT handover during which Radio Access Bearers are established with the target RAT and these bearers are indicated to apper entities of the mobile device.

### Summary of the Invention

A method of handling radio resource reconfiguration for a mobile device in a wireless communication system and a related communication device are provided.

A method of handling radio resource reconfiguration for a mobile device in a wireless communication system is disclosed. The method comprises establishing at least one data radio bearer (DRB) and an Evolved Packet System (EPS)-bearer identity of the at least one DRB, wherein the least one DRB is associated with a first or target radio resource configuration; indicating to an upper layer that establishment of the at least one DRB and the EPS-bearer identity of the at least one DRB is illegal when the mobile device reverts back to a second or source radio resource configuration from the first or target radio resource configuration.

A communication device for handling radio resource reconfiguration in a wireless communication system is disclosed. The communication device comprises means for establishing at least one data radio bearer and an EPS-bearer identity of he at least one DRB, wherein the at least one DRB is associated with a first or target radio resource configuration; means for indicating to an upper layer that establishment of the at least one DRB and the EPS-bearer identity of the at least one DRB is illegal when the communication device reverts back to a second or source radio resource configuration from the first or target radio resource configuration.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of an exemplary wireless communication system.

FIG.2 is a schematic diagram of an exemplary communication device.

FIG.3 illustrates the program code in FIG.2

FIG.4 is a flow chart of an exemplary process.

FIG.5 is a flow chart of an exemplary process.

### Detailed Description

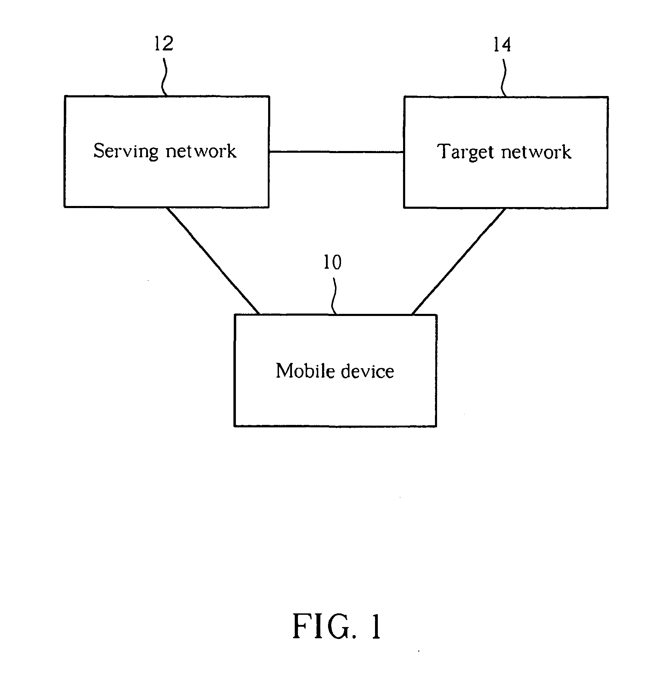

Please refer to FIG. 1, which is a schematic diagram of an exemplary wireless communication system 10. The wireless communication system 10, such as a long-term evolution (LTE) system, Universal Mobile Telecommunications System (UMTS) or other mobile communication systems, comprises briefly a network and a plurality of user equipments (UEs) wherein the UEs can be mobile devices such as mobile phones, laptops, etc. In FIG. 1, the network and the UEs are simply utilized for illustrating the structure of the wireless communication system 10. Practically, the network of the UMTS system, UMTS Terrestrial Radio Access Network (UTRAN), comprises a plurality of base stations, known as Node-Bs (NBs). The network of the LTE system, evolved-UTAN E-UTRAN (E-UTRAN), comprises a plurality of base stations, known as evolved Node-Bs (eNBs). Besides, the network and the UE can be seen as a transmitter or receiver according to transmission direction, e.g., for uplink, the UE is the transmitter and the network is the receiver, and for downlink, the network is the transmitter and the UE is the receiver.

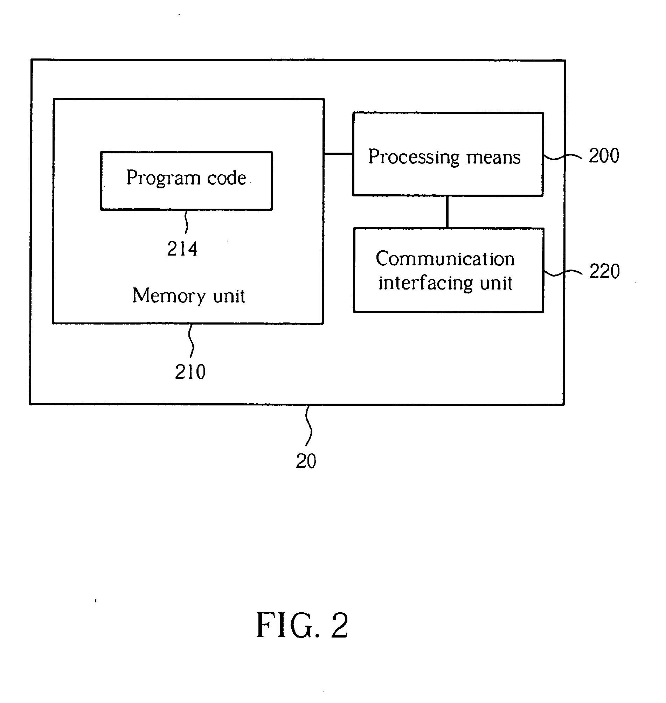

FIG. 2 is a schematic diagram of an exemplary communication device 20. The communication device 20 can be the UEs shown in FIG. 1 and may include a processor 200 such as a microprocessor or ASIC, a memory unit 210, and a communication interfacing unit 220. The memory unit 210 may be any data storage device that can store program code 214, for access by the processor 200. Examples of the memory unit 210 include but are not limited to a subscriber identity module (SIM), read-only memory (ROM), random-access memory (RAM), CD-ROMs, magnetic tapes, hard disks, and optical data storage devices. The communication interfacing unit 220 is preferably a radio transceiver for wirelessly communicating with the network according to processing results of the processor 200.

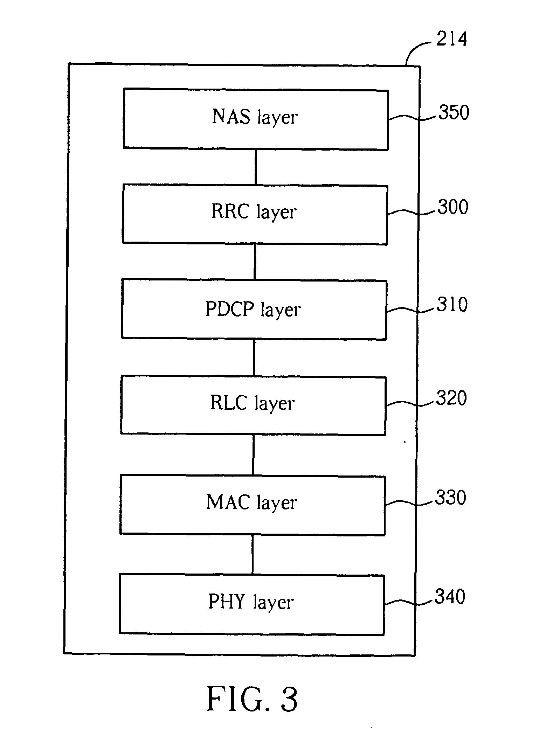

Please refer to Fig. 3, which illustrates the program code 214 in FIG.2. The program code 214 includes program code of multiple communications protocol layers, which from top to bottom are a non-access stratum (NAS) layer 350, a radio resource control (RRC) layer 300, a packet data convergence protocol (PDCP) layer 310, a radio link control (RLC) layer 320, a medium access control (MAC) layer 330 and a physical (PHY) layer 340. The RRC layer 300 communicates with the NAS layer 350 for transfer of common NAS information and dedicated NAS information. The RRC layer 300 cover all procedures related to the establishment, modification and release of an RRC connection, including paging, initial security activation, establishment of Signalling Radio Bearers (SRBs) and of radio bearers carrying user data (Data Radio Bearers, DRBs), handover within LTE (including transfer of UE RRC context information), configuration of the lower protocol layers, access class barring and radio link failure.

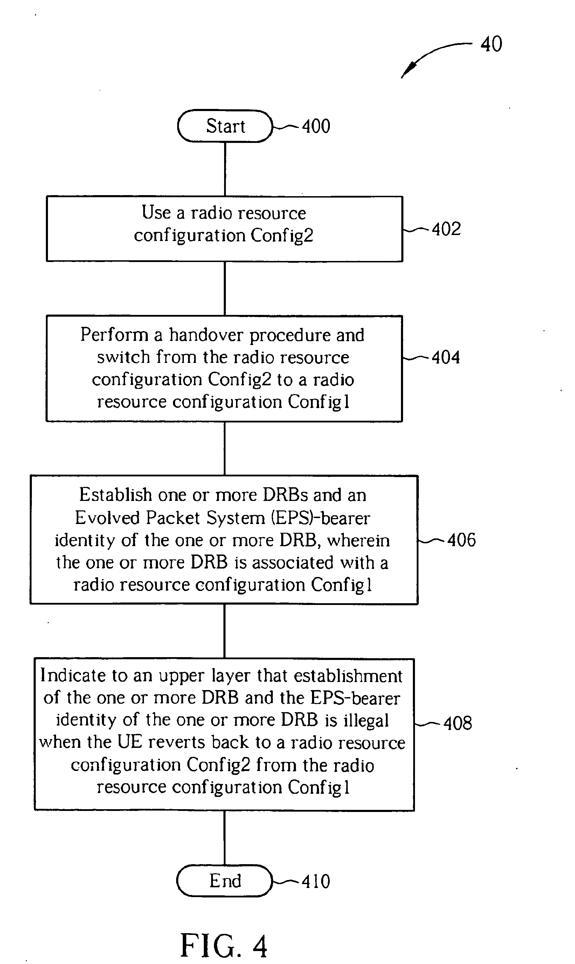

Please refer to FIG.4, which is a flow chart of an exemplary process 40. The process 40 is used for handling radio resource reconfiguration for a UE in the wireless communication system 10. The process 40 can be compiled into the program code 214 and include the following steps:

Step 400: Start.

Step 402: Use a radio resource configuration Config2.

Step 404: Perform a handover procedure and switch from the radio resource configuration Config2 to a radio resource configuration Config1.

Step 406: Establish one or more DRBs and an Evolved Packet System (EPS)-bearer identity of the one or more DRBs, wherein the one or more DRBs is associated with the radio resource configuration Config1.

Step 408: Indicate to an upper layer that establishment of the one or more DRBs and the EPS-bearer identity of the one or more DRBs is illegal when the UE reverts back to the radio resource configuration Config2 from the radio resource configuration Config1.

Step 410: End.

According to the process 40, the UE configured to the radio resource configuration Config2 may perform the handover procedure and switch from the radio resource configuration Config2 to the radio resource configuration Config1. Then, the UE may establish the one or more DRBs and EPS-bearer identity of the one or more DRBs which is associated with the radio resource configuration Config1. When a handover failure occurs, the UE may revert back to the radio resource configuration Config2 from the radio resource configuration Config1. In this situation, the UE indicates to the upper layer (e.g. NAS layer 350) that the establishment of the one or more DRBs and the EPS-bearer identity of the one or more DRBs is illegal. Compared to the prior art, the UE informs the upper layer that the establishment of the one or more DRBs and the EPS-bearer identity of the one or more DRBs is illegal. The upper layer is notified of the illegal establishment of the one or more DRBs and the EPS-bearer identity of the one or more DRBs caused by the handover failure and avoids using the one or more DRBs associated with the radio resource configuration Config1. Consequently, the exemplary process 40 can avoid confusion and radio resource mismatch between the UE and upper layer. Please note that the one or more DRBs associated with the radio resource configuration Config1 may be different than the ones associated with the radio resource configuration Config2, or partially identical to the ones associated with the radio resource configuration Config2.

In some examples, the UE may release the one or more DRBs and the EPS-bearer identity of the one or more DRBs and indicate to the upper release of the one or more DRBs and the EPS-bearer identity of the one or more DRBs when the establishment of the one or more DRBs and the EPS-bearer identity of the one or more DRBs is illegal. In some examples, the UE may cancel the one or more DRBs and the EPS-bearer identity of the one or more DRBs and indicate to the upper cancellation of the one or more DRBs and the EPS-bearer identity of the one or more DRBs when the establishment of the one or more DRBs and the EPS-bearer identity of the one or more DRBs is illegal.

Furthermore, a network may initiate the handover procedure, by sending a message msg1 to the UE. The UE is configured to the radio resource configuration Config1 from the radio resource configuration Config2 according to reception of the message msg1. The message msg1 may be referred as to a RRCConnectionReconfiguration message. The RRCConnectionReconfiguration message includes radio resource configuration Config1 used to establish the one or more DRBs and signaling radio bearer SRB2. The RRCConnectionReconfiguration message may also include other information such as a NAS message or a measurement configuration.

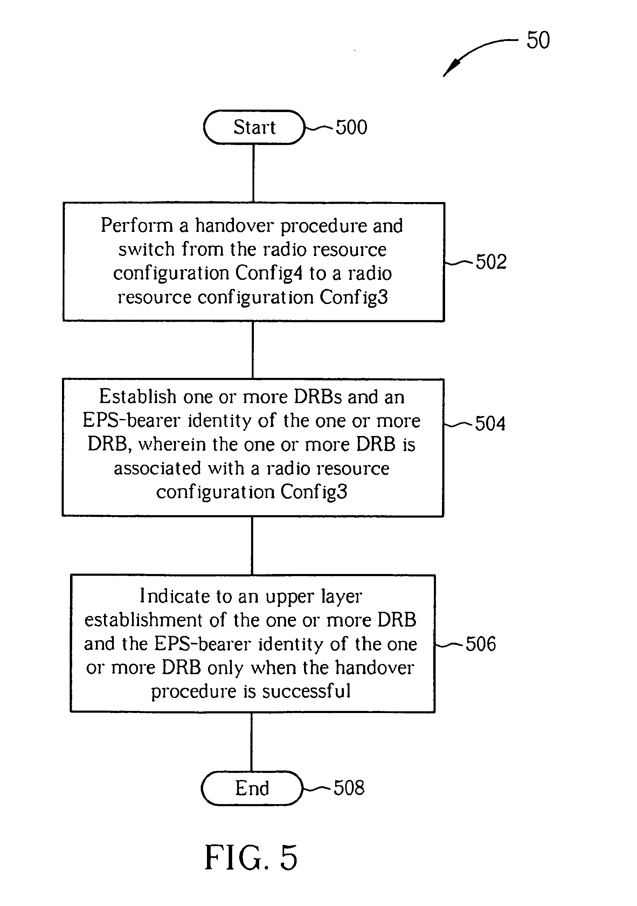

Please refer to FIG.5, which is a flow chart of an exemplary process 50. The process 50 is used for handling radio resource reconfiguration for a UE in the wireless communication system 10. The process 50 can be compiled into the program code 214 and include the following steps:

Step 500: Start.

Step 502: Perform a handover procedure and switch from a radio resource configuration Config4 to a radio resource configuration Config3.

Step 504: Establish one or more DRBs and an EPS-bearer identity of the one or more DRBs, wherein the one or more DRBs is associated with a radio resource configuration Config3.

Step 506: Indicate to an upper layer establishment of the one or more DRBs and the EPS-bearer identity of the one or more DRBs only when the handover procedure is successful.

Step 508: End.

According to the process 50, the UE configured to the radio resource configuration Config4 may perform the handover procedure and switch from the radio resource configuration Config4 to the radio resource configuration Config3. Then, the UE may establish the one or more DRBs and EPS-bearer identity of the one or more DRBs which is associated with the radio resource configuration Config3. When the handover procedure is successful, the UE indicates to the upper layer (e.g. NAS layer 350) that the establishment of the one or more DRBs and the EPS-bearer identity of the one or more DRBs. Compared to the prior art, the UE informs the upper layer of the establishment of the one or more DRBs and the EPS-bearer identity of the one or more DRBs only when the handover procedure is successful (i.e. the UE handovers to a new cell). If the handover procedure fails, the UE does not inform the upper of the establishment of the one or more DRBs and the EPS-bearer identity of the one or more DRBs. Therefore, the upper layer is not notified of the establishment of the one or more DRBs and the EPS-bearer identity of the one or more DRBs when the handover procedure fails. Consequently, the exemplary process 50 can avoid confusion and radio resource mismatch between the UE and upper layer. Please note that the one or more DRBs associated with the radio resource configuration Config3 may be different than the ones associated with the radio resource configuration Config4, or partially identical to the ones associated with the radio resource configuration Config4.

Furthermore, a network may initiate the handover procedure, by sending a message msg2 to the UE. The UE is configured to the radio resource configuration Config3 from the radio resource configuration Config4 according to reception of the message msg2. The message msg2 may be referred as to a RRCConnectionReconfiguration message. The RRCConnectionReconfiguration message includes radio resource configuration Config3 used to establish the one or more DRBs and signaling radio bearer SRB2. The RRCConnectionReconfiguration message may also include other information such as a NAS message or a measurement configuration.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processor 200 processes the program code 214 related to the abovementioned processes and the processed results can handling radio resource reconfiguration in the wireless communications system 20.

To sum up, when the UE configured to a first radio resource configuration performs a handover procedure, the UE switch from the first radio resource configuration to a second radio resource configuration, establishing one or more DRBs and EPS-bearer identity of the one or more DRBs of the second radio resource configuration. In one example, the UE indicates to the upper layer that establishment of the one or more DRBs and the EPS-bearer identity of the one or more DRBs is illegal when the handover procedure fails. Thus, the upper layer can avoid using the one or more DRBs associated with the second radio resource configuration. In another example, the UE indicates to the upper layer establishment of the one or more DRBs and the EPS-bearer identity of the one or more DRBs only when the handover procedure is successful. Both of examples can resolve radio resource mismatch between the UE and the upper layer.

Those skilled in the art will readily observe that numerous modifications and alterations of the device and method may be made while retaining the teachings of the invention. Accordingly, the above disclosure should be construed as limited only by the scope of the appended claims.

## Claims

1. A method of handling radio resource reconfiguration for a mobile device in a wireless communication system, the method comprising:
establishing at least one data radio bearer, DRB, and an Evolved Packet System, EPS,-bearer identity of the least one DRB, wherein the at least one DRB is associated with a first or target radio resource configuration (406, 504); and
indicating to an upper layer that establishment of the at least one DRB and the EPS-bearer identity of the at least one DRB is illegal when the mobile device reverts back to a second or source radio resource configuration from the first or target radio resource configuration (408, 506).

2. The method of claim 1, wherein indicating to the upper layer that the establishment of the at least one DRB and the EPS-bearer identity of the at least one DRB is illegal comprises indicating to an upper layer release of the at least one DRB and the EPS-bearer identity of the at least one DRB.

3. The method of claim 1, wherein indicating to the upper layer that the establishment of the at least one DRB and the EPS-bearer identity of the at least one DRB is illegal comprises indicating to an upper layer cancellation of the at least one DRB and the EPS-bearer identity of the at least one DRB.

4. The method of claim 1, wherein reverting back to the second radio resource configuration from the first or target radio resource configuration comprises reverting back to the second or source radio resource configuration from the first or target radio resource configuration when the mobile device fails to configure the first or target radio resource configuration due to a handover failure.

5. The method of claim 1 further comprising:
receiving a message from a network; and
configuring the first or target radio resource configuration from the second or source radio resource configuration according to reception of the message;
wherein the message is an RRCConnectionReconfiguration message.

6. A communication device (10, 20) for handling radio resource reconfiguration in a wireless communication system, the communication device (10, 20) comprising:
means for establishing at least one data radio bearer, DRB, and an Evolved Packet System, EPS,-bearer identity of the at least one DRB, wherein the at least one DRB is associated with a first or target radio resource configuration; and
means for indicating to the upper layer that establishment of the at least one DRB and the EPS-bearer identity of the at least one DRB is illegal when the communication device reverts back to a second or source radio resource configuration from the first or target radio resource configuration.

7. The communication device of claim 6, wherein the means for indicating to the upper layer that the establishment of the at least one DRB and the EPS-bearer identity of the at least one DRB is illegal further indicates to the upper layer release of the at least one DRB and the EPS-bearer identity of the at least one DRB.

8. The communication device of claim 6, wherein the means for indicating to the upper layer that the establishment of the at least one DRB and the EPS-bearer identity of the at least one DRB is illegal further indicates to the upper layer cancellation of the at least one DRB and the EPS-bearer identity of the at least one DRB.

9. The communication device of claim 6 further comprising means for reverting back to the second or source radio resource configuration from the first or target radio resource configuration comprise when the communication device fails to configure the first or target radio resource configuration due to a handover failure.

10. The communication device of claim 6 further comprising:
means for receiving a message from a network; and
means for configuring the first or target radio resource configuration from the second or source radio resource configuration according to reception of the message;
wherein the message is an RRCConnectionReconfiguration message.

## Patentansprüche

1. Verfahren zur Abwicklung bzw. Handhabung der Funkressourcenneukonfiguration für eine mobile Vorrichtung in einem Drahtloskommunikationssystem, wobei das Verfahren Folgendes aufweist:
Aufbauen von zumindest einem Datenfunkträger bzw. DRB (DRB = Data Radio Bearer) und einer weiterentwickelten Paketsystem- bzw. EPS-Trägeridentität (EPS = Evolved Packet System) des zumindest einen DRB,
wobei zumindest ein DRB mit einer ersten oder Zielfunkressourcenkonfiguration (406, 504) assoziiert ist; und
Berichten an eine obere Schicht, dass der Aufbau des zumindest einen DRB und der EPS-Trägeridentität des zumindest einen DRB illegal ist, wenn die mobile Vorrichtung zu einer zweiten oder Quellenfunkressourcenkonfiguration von der ersten oder Zielfunkressourcenkonfiguration zurückkehrt (408, 506).

2. Verfahren gemäß Anspruch 1, wobei das Berichten an eine obere Schicht, dass der Aufbau des zumindest einen DRB und der EPS-Trägeridentität der zumindest einen DRB illegal ist, das Berichten der Freigabe des zumindest einen DRB und der EPS-Trägeridentität des zumindest einen DRB an eine obere Schicht aufweist.

3. Verfahren gemäß Anspruch 1, wobei das Berichten an die obere Schicht, dass der Aufbau des zumindest einen DRB und der EPS-Trägeridentität des zumindest einen DRB illegal ist, das Berichten an eine obere Schicht der Aufhebung des zumindest einen DRB und der EPS-Trägeridentität des zumindest einen DRB aufweist.

4. Verfahren gemäß Anspruch 1, wobei das Zurückkehren zu der zweiten Funkressourcenkonfiguration von der ersten oder Zielressourcenkonfiguration das Zurückkehren zu der zweiten oder Quellenfunkressourcenkonfiguration von der ersten oder Zielfunkressourcenkonfiguration aufweist, wenn die mobile Vorrichtung nicht imstande ist, die erste oder Zielfunkressourcenkonfiguration aufgrund eines Übergabe- bzw. Handover-Fehlers zu konfigurieren.

5. Verfahren gemäß Anspruch 1, das ferner Folgendes aufweist:
Empfangen einer Nachricht von einem Netzwerk; und
Konfigurieren der ersten oder Zielfunkressourcenkonfiguration von der zweiten oder Quellenfunkressourcenkonfiguration gemäß dem Empfang der Nachricht;
wobei die Nachricht eine Verbindungsneukonfigurationsnachricht der Funkressourcensteuerung bzw. eine RRCConnectionReconfiguration-Nachricht ist.

6. Kommunikationsvorrichtung (10, 20) zur Abwicklung bzw. Handhabung der Funkressourcenneukonfiguration in einem Drahtloskommunikationssystem, wobei die Kommunikationsvorrichtung (10, 20) Folgendes aufweist:
Mittel zum Aufbauen von zumindest einem Datenfunkträger bzw. DRB (DRB = Data Radio Bearer) und einer weiterentwickelten Paketsystem- bzw. EPS-Trägeridentität des zumindest einen DRB, wobei der zumindest eine DRB mit einer ersten oder Zielfunkressourcenkonfiguration assoziiert ist; und
Mittel zum Berichten an die obere Schicht, dass der Aufbau des zumindest einen DRB und der EPS-Trägeridentität der zumindest einen DRB illegal ist,
wenn die Kommunikationsvorrichtung zu einer zweiten oder Quellenfunkressourcenkonfiguration von der ersten oder Zielfunkressourcenkonfiguration zurückkehrt.

7. Kommunikationsvorrichtung gemäß Anspruch 6, wobei das Mittel zum Berichten an die obere Schicht, dass der Aufbau des zumindest einen DRB und der EPS-Trägeridentität des zumindest einen DRB illegal ist, ferner an die obere Schicht die Freigabe des zumindest einen DRB und der EPS-Trägeridentität des zumindest einen DRB berichtet.

8. Kommunikationsvorrichtung gemäß Anspruch 6, wobei das Mittel zum Berichten an die obere Schicht, dass der Aufbau des zumindest einen DRB und der EPS-Trägeridentität des zumindest einen DRB illegal ist, ferner der oberen Schicht die Aufhebung des zumindest einen DRB und der EPS-Trägeridentität des zumindest einen DRB berichtet.

9. Kommunikationsvorrichtung gemäß Anspruch 6, die ferner ein Mittel zum Zurückkehren zu der zweiten oder Quellenfunkressourcenkonfiguration von der ersten oder Zielfunkressourcenkonfiguration aufweist, wenn die Kommunikationsvorrichtung nicht imstande ist, die erste oder Zielfunkressourcenkonfiguration aufgrund eines Handover-Fehlers zu konfigurieren.

10. Kommunikationsvorrichtung gemäß Anspruch 6, die ferner Folgendes aufweist:
Mittel zum Empfangen einer Nachricht von einem Netzwerk; und
Mittel zum Konfigurieren der ersten oder Zielfunkressourcenkonfiguration von der zweiten oder Quellenfunkressourcenkonfiguration gemäß dem Empfang der Nachricht;
wobei die Nachricht eine RRCConnectionReconfiguration-Nachricht ist.

## Revendications

1. Procédé pour gérer la reconfiguration de ressources radio pour un dispositif mobile dans un système de communication sans fil, le procédé comprenant les étapes suivantes :
établir au moins un porteur radio de données, DRB, et une identité de porteur de Système de Paquets Évolué, EPS, dudit au moins un DRB, ledit au moins un DRB étant associé à une configuration de ressources radio première ou cible (406, 504) ;
et
indiquer à une couche supérieure que l'établissement dudit au moins un DRB et de l' identité de porteur EPS dudit au moins un DRB est illégal lorsque le dispositif mobile revient vers une configuration de ressources radio seconde ou source à partir de la configuration de ressources radio première ou cible (408, 506).

2. Procédé selon la revendication 1, dans lequel l'indication à la couche supérieure que l'établissement dudit au moins un DRB et de l' identité de porteur EPS dudit au moins un DRB est illégal comprend l'indication à une couche supérieure de la libération dudit au moins un DRB et de l'identité de porteur EPS dudit au moins un DRB.

3. Procédé selon la revendication 1, dans lequel l'indication à la couche supérieure que l'établissement dudit au moins un DRB et de l' identité de porteur EPS dudit au moins un DRB est illégal comprend l'indication à une couche supérieure de l'annulation dudit au moins un DRB et de l'identité de porteur EPS dudit au moins un DRB.

4. Procédé selon la revendication 1, dans lequel le retour vers la seconde configuration de ressources radio à partir de la configuration de ressources radio première ou cible comprend le retour vers la configuration de ressources radio seconde ou source à partir de la configuration de ressources radio première ou cible lorsque le dispositif mobile échoue à configurer la configuration de ressources radio première ou cible en raison d'un échec de transfert.

5. Procédé selon la revendication 1, comprenant en outre les étapes suivantes :
recevoir un message à partir d'un réseau ; et
configurer la configuration de ressources radio première ou cible à partir de la configuration de ressources radio seconde ou source conformément à la réception du message ;
dans lequel le message est un message RRCConnectionReconfiguration.

6. Dispositif de communication (10, 20) pour gérer la reconfiguration de ressources radio dans un système de communication sans fil, le dispositif de communication (10, 20) comprenant :
des moyens pour établir au moins un porteur radio de données, DRB, et une identité de porteur de Système de Paquets Évolué, EPS, dudit au moins un DRB, ledit au moins un DRB étant associé à une configuration de ressources radio première ou cible ; et
des moyens pour indiquer à une couche supérieure que l'établissement dudit au moins un DRB et de l'identité de porteur EPS dudit au moins un DRB est illégal lorsque le dispositif de communication revient vers une configuration de ressources radio seconde ou source à partir de la configuration de ressources radio première ou cible.

7. Dispositif de communication selon la revendication 6, dans lequel les moyens pour indiquer à la couche supérieure que l'établissement dudit au moins un DRB et de l'identité de porteur EPS dudit au moins un DRB est illégal indiquent en outre à la couche supérieure la libération dudit au moins un DRB et de l'identité de porteur EPS dudit au moins un DRB.

8. Dispositif de communication selon la revendication 6, dans lequel les moyens pour indiquer à la couche supérieure que l'établissement dudit au moins un DRB et de l'identité de porteur EPS dudit au moins un DRB est illégal indiquent en outre à la couche supérieure l'annulation dudit au moins un DRB et de l'identité de porteur EPS dudit au moins un DRB.

9. Dispositif de communication selon la revendication 6, comprenant en outre des moyens pour revenir vers la configuration de ressources radio seconde ou source à partir de la configuration de ressources radio première ou cible lorsque le dispositif mobile échoue à configurer la configuration de ressources radio première ou cible en raison d'un échec de transfert.

10. Dispositif de communication selon la revendication 6, comprenant en outre :
des moyens pour recevoir un message à partir d'un réseau ; et
des moyens pour configurer la configuration de ressources radio première ou cible à partir de la configuration de ressources radio seconde ou source conformément à la réception du message ;
dans lequel le message est un message RRCConnectionReconfiguration.
